# EUROPEAN PATENT SPECIFICATION

(11) **EP 4 063 226 B1**
(45) Date of publication and mention of the grant of the patent: **02.07.2025**
(21) Application number: 20900948.9
(22) Date of filing: 23.07.2020
(51) Int. Cl.: B61F 5/30, B61F 15/20, H02K 7/18, B61F 15/02

(54) **HIGH-SPEED RAILWAY WAGON BOGIE CAPABLE OF INDEPENDENT POWER GENERATION**
HOCHGESCHWINDIGKEITSWAGENDREHGESTELL FÜR DIE UNABHÄNGIGE STROMERZEUGUNG
BOGIE DE WAGON DE CHEMIN DE FER À GRANDE VITESSE APTE À PRODUIRE DE L'ÉNERGIE DE MANIÈRE INDÉPENDANTE

(30) Priority: 20.12.2019 CN 201911326263
(43) Date of publication of application: 28.09.2022
(73) Proprietor: CRRC Meishan Co., Ltd., Meishan, Sichuan 620032 (CN)
(72) Inventor: LIAO, Jun, Meishan, Sichuan 620032 (CN); ZHU, Ji, Meishan, Sichuan 620032 (CN); YANG, Jun, Meishan, Sichuan 620032 (CN); WU, Chang, Meishan, Sichuan 620032 (CN); ZHANG, Xianfeng, Meishan, Sichuan 620032 (CN); LI, Dong, Meishan, Sichuan 620032 (CN); LUO, Hanjiang, Meishan, Sichuan 620032 (CN); ZHANG, Rui, Meishan, Sichuan 620032 (CN); ZHANG, Guangcai, Meishan, Sichuan 620032 (CN); FENG, Chengli, Meishan, Sichuan 620032 (CN); WANG, Yungui, Meishan, Sichuan 620032 (CN); LI, Jiale, Meishan, Sichuan 620032 (CN); LIU, Bing, Meishan, Sichuan 620032 (CN); XIE, Lin, Meishan, Sichuan 620032 (CN); XU, Zhi, Meishan, Sichuan 620032 (CN)
(74) Representative: Ipside
(86) International application number: PCT/CN2020/103904
(87) International publication number: WO 2021/120622

(56) References cited:
- EP-A1- 0 613 809
- EP-A1- 2 783 939
- CN-A- 103 023 164
- CN-A- 103 051 132
- CN-A- 103 661 464
- CN-A- 106 428 081
- CN-A- 106 809 233
- CN-A- 109 878 545
- CN-A- 110 920 655
- CN-Y- 2 931 192
- US-A- 5 775 229
- US-B1- 6 220 175

## Description

### Technical Field

The present invention relates to the design technique of railway freight transportation equipment, and more particularly, to the design technique of a freight car bogie, and belongs to the technical field of design and manufacture of railway vehicles and electromechanical products.

### Background of the Invention

At present, the speed of the main bogies of railway freight cars in China generally reaches 120km/h. However, higher speed can be hardly achieved as it is limited by the structure. The traditional three-piece bogie has a large non-suspended weight, which increases the wheel-rail contact force, resulting in serious wear on the wheel, rail, and suspension device. The dynamic performance of the bogie deteriorates with the rise of speed, the vibration acceleration of the car increases, and the stability decreases. Meanwhile, the running state of freight cars also lacks intelligent monitoring due to the absence of electric energy input. With the increase of high value-added cargo transportation by railway, especially express container transportation, there is an urgent need for an express freight car bogie with high speed, excellent dynamic performance, and self-generating function.

A patent application No. CN 106 809 233 A discloses a railway manifest bogie which comprises a framework, four sets of tumbler type axle box positioning devices, two sets of wheel pairs, a swing bolster and a set of basic braking devices. A U-shaped cavity in the middle of a side beam of the framework is provided with a two-line rubber-metal pad installation platform and provides installation space for the swing bolster and the two-line rubber-metal pad; the swing bolster adopts a two-line rubber-metal pad installation base of a forge piece for replacing a welding structure with actual stress exceeding allowable stress.

Another patent application No. US 6 220 175 B1 discloses an apparatus and a method of mounting a standard size power generating unit to any one of several different sized railroad cars utilizes different sized interface blocks to mate the unit to the bearing adapter blocks of the cars. The axle of the car includes a projection extending from an end thereof and the power generating unit includes a frame and a rotor arranged for rotation in the frame for generating the power. A drive shaft is attached to the rotor and includes a follower for engaging the projection so that when the axle is rotated about the axis, the projection engages the follower and thereby rotates the rotor. The interface block is disposed between the frame and the bearing adapter block, a first surface of the interface block being attached to the bearing adapter block and the frame being attached to a second surface of the interface block opposite the first surface.

### Summary of the Invention

The present invention discloses a railway self-generating express freight car bogie according to the defects of the prior art. The problem to be solved by the present invention is to provide an express freight car bogie that meets the development needs of express container transportation, can run at a speed of up to 160km/h, and has excellent dynamic performance and self-generating function.

The invention is set out in the appended set of claims.

The present invention is realized by the following technical solution:
A railway self-generating express freight car bogie according to claim 1.

The central suspension device is an elastic element formed by a metal plate and vulcanized rubber.

The journal box suspension device consists of the journal box body which is connected with the axle of the wheel-axle assembly, and the top rubber spring of the journal box body. Meanwhile, to facilitate installation and maintenance of the vertical damper, a vertical damper mount is provided at one end of the journal box body, and a circular mounting hole at the other end for mounting the rubber node of the positioning arm. The circular mounting hole and the rubber node of the positioning arm are in an interference fit.

The top rubber spring of the journal box body is an elastic element formed by a metal plate and vulcanized rubber.

The rubber node of the positioning arm is an elastic element formed by a metal mandrel and vulcanized rubber. The rubber node of the positioning arm allows the journal box to have a great displacement in the up and down directions relative to the frame. The design of the rubber part realizes different positioning stiffness of the journal box during longitudinal and transverse displacement to meet the requirements of different elastic positioning stiffness in the longitudinal and transverse directions.

The frame is connected to the journal box suspension device through the top rubber spring of the journal box body; the vertical damper mount at one end of the journal box body is connected to the frame side beam through the vertical damper.

The frame is welded with two sets of box-type side beams and two parallel tubular cross beams passing through them. All components arranged on the frame are fixed by welding. A seat is provided on the inner side of the middle part of the side beams for mounting the central suspension device.

The components include unit braking system hanger, traction device mount, lateral damper mount, brake pipe hanger, suspension seat, lateral stop mount, spherical hinge mount, and vertical damper mount frame. The brake is a disc brake, consisting of four systems matched with four wheels respectively, and each system includes a brake caliper device set arranged on the cross beam and a brake disc device on the axle. The side beam on one side of the frame is provided with empty/load auto-adjustment equipment. Longitudinal traction devices connected with the bolster are provided at both ends of the middle part of each cross beam of the frame, and a lateral damper connected with the bolster is provided on each side beam of the frame.

The bolster of the present invention is a box beam structure welded with stencil plates, including upper cover plate, web plate and lower cover plate; the cross-section of the bolster is a U-shaped structure with two wings, with the middle part lower than the two ends.

A lower center plate is provided on the upper surface of the U-shaped structure of the bolster, and a lateral damper mount on the lower surface. Side bearing boxes are provided at the two ends of the U-shaped structure. Traction device mounts are provided at the two ends and the U-shaped transition section of the lower surface of the U-shaped structure of the bolster.

The primary vibration damping system of the bogie is composed of a journal box suspension device and a vertical damper.

The side beam is a box beam structure welded with stencil plates, including upper cover plate, web plate and lower cover plate; the cross-section of the side beam is a U-shaped structure with two wings, with the middle part lower than the two ends; a suspension seat integrated with the lower cover plate is provided on the inner side of the U-shaped structure.

Lateral stop mounts are provided in the middle of the upper plane of the U-shaped structure of the two side beams of the bogie frame.

The positioning of the bogie journal box suspension device is realized by the positioning arm-type journal box. The journal box consists of two mounting holes and a vertical damper mount to form a positioning arm. The larger hole in the middle is used to fit the axle bearing, and the smaller hole at one end is used to mount the rubber node of the positioning arm. The rubber node is connected to the mount welded to the frame. The vertical damper mount at the other end is connected to the frame through the vertical damper. In the dynamic operation of the car, positioning is formed with the larger circular hole in the center as the rotation pivot point, and the smaller circular hole and the vertical damper mount are used as the two arms.

A vertical damper is provided at the end of each side beam. The lower end of the vertical damper is hinged on the journal box suspension device, and the upper end is hinged on the side beam through the hinge seat. The vertical damper is mounted vertically.

The railway self-generating express freight car bogie of the present invention consists of wheel-axle assembly, frame, journal box suspension device, bolster, foundation brake, side bearing, empty/load auto-adjustment equipment, central suspension device, longitudinal traction device, vertical damper, lateral damper, lateral stop, and axle-end generator.

The axle-end generator of the present invention is located outside the journal box suspension device. The axle-end generator is composed of a rotor and a stator. The rotor has a permanent magnet and is connected with the axle by bolts; the stator has a coil and is connected with the journal box by bolts; the rotor rotates together with the axle, the angular speed of rotor rotation is synchronized with the angular speed of axle rotation, and the conductor cuts the magnetic lines of force to generate a voltage (current); the generator can generate electricity when the car is running in both forward and reverse directions.

The primary vibration damping system of the bogie of the present invention is composed of a journal box suspension device and a vertical damper, used to reduce the vibration acceleration when the car is running.

A suspension seat is provided on the inside of the two side beams of the bogie frame of the present invention to reduce the bearing span of the bolster and improve the load condition; the central suspension device of the bogie is placed inside the frame, so that the bolster is shorter in length, lighter in weight and simpler in structure.

The lateral stop of the bogie of the present invention is placed in the middle of the upper plane of the two side beams of the frame; the bogie frame and the bolster of the present invention are welded frame structural parts; the positioning of the bogie journal box suspension device of the present invention is realized by the positioning arm-type journal box.

The beneficial effects of the present invention are as follows. As the bogie is provided with an axle-end generator, it can provide electric energy input for the running state monitoring system of the freight car and various on-board low-power electrical equipment and facilities; The bogie is designed according to the zero-wear concept, and a large number of rubber components and hydraulic dampers are used to improve the lateral stability, linear stability and curve passing performance of the car, so that the bogie is highly adaptable to railway lines, can meet the operating requirements within 160km/h, and is suitable for various types of express freight cars that run on 1435mm standard gauge railways in China, such as sliding side box car or roof box car and container flat car; Meanwhile, it also reduces the workload of bogie operation and maintenance.

### Brief description of the Drawings

Fig. 1 is an axonometric view of the bogie of the present invention.
Fig. 2 is the top view of the bogie of the present invention.
Fig. 3 is a bottom view of the bogie of the present invention.
Fig. 4 is a schematic diagram of the bogie frame of the present invention.
Fig. 5 is a schematic diagram of the installation of the axle-end generator of the bogie of the present invention.
Fig. 6 is a schematic diagram of the composition of the bogie journal box suspension device of the present invention.

Reference numbers: 1- wheel-axle assembly; 1.1-bearing; 2-frame; 2.1-side beam; 2.2-suspension seat; 2.3-lateral stop mount; 3- journal box suspension device; 3.1- journal box body; 3.2-rubber spring; 3.3-positioning arm rubber node; 3.4-vertical damper mount, 4-bolster, 5-foundation brake; 6-side bearing; 7-empty/load auto-adjustment equipment; 8-central suspension device; 9-longitudinal traction device; 10-vertical damper; 11-lateral damper; 12-lateral stop; 13-axle-end generator.

### Detailed Description of Embodiments

The present invention is further described below in combination with specific embodiments which further illustrate principles of the present invention and do not limit the present invention in any way.

### Refer to the figures.

The railway self-generating express freight car bogie consists of wheel-axle assembly 1, frame 2, journal box suspension device 3, bolster 4, foundation brake 5, side bearing 6, empty/load auto-adjustment equipment 7, central suspension device 8, longitudinal traction device 9, vertical damper 10, lateral damper 11, and axle-end generator 13. An axle-end generator 13 is connected at the outer end of an axle of the wheel-axle assembly 1, the rotor part of the axle-end generator 13 is connected to the end bearing 1.1 of the wheel-axle assembly 1 by the axle-end bolts, and the stator part is connected to the mount of the journal box suspension devices 3; the frame 2 is located above the four journal box suspension devices 3, and the two ends of the bolster 4 are respectively fixed on the inner suspension seat 2.2 in the middle of the side beam 2.1 of the frame 2 through the central suspension device 8.

The central suspension device 8 is an elastic element formed by a metal plate and vulcanized rubber.

The journal box suspension device 3 consists of the journal box body 3.1 which is connected with the axle of the wheel-axle assembly 1, and the top rubber spring 3.2 of the journal box body 3.1. Meanwhile, to facilitate installation and maintenance of the vertical damper, a vertical damper mount 3.4 is provided at one end of the journal box body, and a circular mounting hole at the other end for mounting the rubber node 3.3 of the positioning arm.

The top rubber spring 3.2 of the journal box body is an elastic element formed by a metal plate and vulcanized rubber.

The rubber node 3.3 of the positioning arm is an elastic element formed by a metal mandrel and vulcanized rubber. The rubber node 3.3 of the positioning arm allows the journal box to have a great displacement in the up and down directions relative to the frame. The design of the rubber part realizes different positioning stiffness of the journal box during longitudinal and transverse displacement to meet the requirements of different elastic positioning stiffness in the longitudinal and transverse directions. The circular mounting hole and the rubber node 3.3 of the positioning arm are in an interference fit.

The frame 2 is connected to the journal box suspension device 3 through the top rubber spring 3.2 of the journal box body 3.1; the vertical damper mount 3.4 at one end of the journal box body 3.1 is connected to the frame side beam 2.1 through the vertical damper 10.

The frame 2 is welded with two sets of box-type side beams 2.1 and two parallel tubular cross beams passing through them. All components arranged on the frame 2 are fixed by welding. A seat 8 is provided on the inner side of the middle part of the side beams 2.1 for mounting the central suspension device. The components include unit braking system hanger, traction device mount, lateral damper mount, brake pipe hanger, suspension seat, lateral stop mount, spherical hinge mount, and vertical damper mount frame.

The foundation brake 5 is a disc brake, consisting of four systems matched with four wheels respectively, and each system includes a brake caliper device set arranged on the cross beam and a brake disc device on the axle.

The side beam 2.1 on one side of the frame 2 is provided with empty/load auto-adjustment equipment 7. Longitudinal traction devices 9 connected with the bolster 4 are provided at both ends of the middle part of each cross beam of the frame 2, and a lateral damper 11 connected with the bolster 4 is provided on each side beam 2.1 of the frame 2.

The bolster 4 is a box beam structure welded with stencil plates, including upper cover plate, web plate and lower cover plate; the length of the bolster is smaller than the center distance of the bogie journal and is placed on the inside of the bogie frame 2; the cross-section of the bolster 4 is a U-shaped structure with two wings, with the middle part lower than the two ends.

A lower center plate is provided on the upper surface of the U-shaped structure of the bolster, and a lateral damper mount 11 on the lower surface. Side bearing boxes are provided at the two ends of the U-shaped structure. Traction device mounts are provided at the two ends and the U-shaped transition section of the lower surface of the U-shaped structure of the bolster.

The primary vibration damping system of the bogie is composed of a journal box suspension device 3 and a vertical damper 10.

The side beam 2.1 is a box beam structure welded with stencil plates, including upper cover plate, web plate and lower cover plate; the cross-section of the side beam is a U-shaped structure with two wings, with the middle part lower than the two ends; a suspension seat 2.2 integrated with the lower cover plate is provided on the inner side of the U-shaped structure.

Lateral stop mounts 2.3 are provided in the middle of the upper plane of the U-shaped structure of the two side beams of the bogie frame 2.

The positioning of the bogie journal box suspension device 3 is realized by the positioning arm-type journal box. The journal box consists of two mounting holes and a vertical damper mount 3.4 to form a positioning arm. The larger hole in the middle is used to fit the axle bearing 1.1, and the smaller hole at one end is used to mount the rubber node 3.3 of the positioning arm. The rubber node 3.3 is connected to the mount welded to the frame 2. The vertical damper mount 3.4 at the other end is connected to the frame through the vertical damper 10. In the dynamic operation of the car, positioning is formed with the larger circular hole in the center as the rotation pivot point, and the smaller circular hole and the vertical damper mount 3.4 are used as the two arms.

A vertical damper 10 is provided at the end of each side beam 2.1. The lower end of the vertical damper 10 is hinged on the journal box suspension device 3, and the upper end is hinged on the side beam 2.1 through the hinge seat. The vertical damper 10 is mounted vertically.

The axle-end generator 13 of the present invention is located outside the journal box suspension device 3. The axle-end generator 13 is composed of a rotor and a stator. The rotor has a permanent magnet and is connected with the axle by bolts; the stator has a coil and is connected with the journal box by bolts; the rotor rotates together with the axle, the angular speed of rotor rotation is synchronized with the angular speed of axle rotation, and the conductor cuts the magnetic lines of force to generate a voltage (current); the generator can generate electricity when the car is running in both forward and reverse directions.

The bogie of the present invention is equipped with a primary vibration damping system composed of a journal box suspension device 3 and a vertical damper 10, used to reduce the vibration acceleration when the car is running;

A suspension seat 2.2 is provided on the inside of the two side beams 2.1 of the bogie frame 2 of the present invention to reduce the bearing span of the bolster and improve the load condition; the central suspension device 8 of the bogie is placed inside the frame 2, so that the bolster 4 is shorter in length, lighter in weight and simpler in structure.

The lateral stop 12 of the bogie of the present invention is placed in the middle of the upper plane of the two side beams 2.1 of the frame 2; the bogie frame 2 and the bolster 4 are welded frame structural parts;

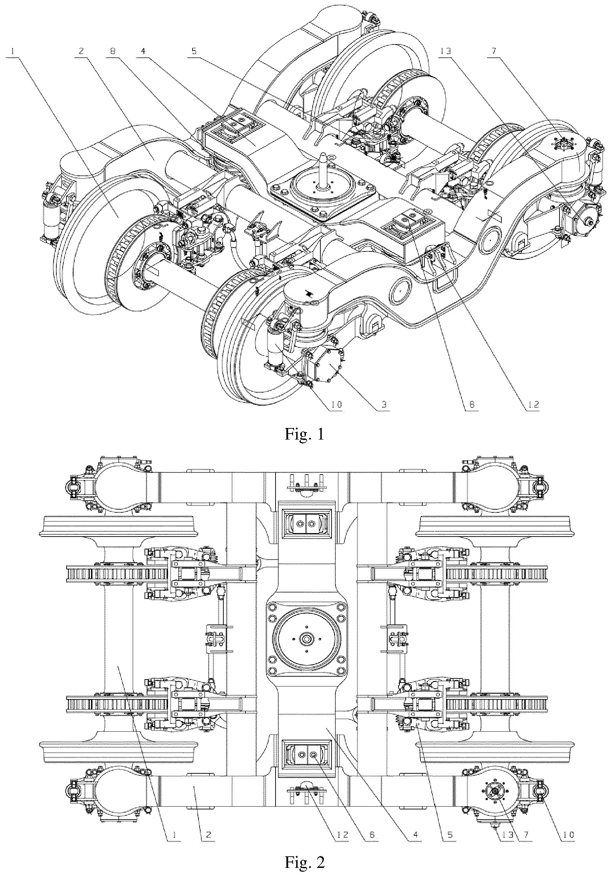

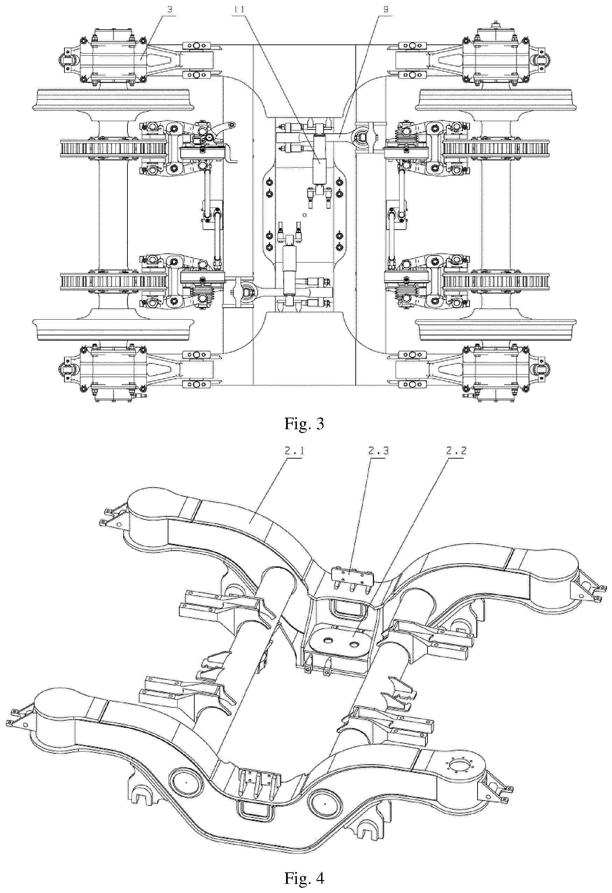

As shown in Figs. 1 to 4, the bogie of the present invention consists of wheel-axle assembly 1, frame 2, journal box suspension device 3, bolster 4, foundation brake 5, side bearing 6, empty/load auto-adjustment equipment 7, central suspension device 8, longitudinal traction device 9, vertical damper 10, lateral damper 11, lateral stop 12, and axle-end generator 13.

A journal box suspension device 3 is installed at both ends of the wheel-axle assembly 1; the frame 2 is located above the four journal box suspension devices 3; a suspension seat 2.2 is provided on the inside of the two side beams 2.1 of the frame 2 for mounting the central suspension device 8; the bolster 4 is placed above the two central suspension devices 8; the foundation brake 5 is installed on the frame 2 through the hanger; a side bearing 6 is located at both ends of the bolster 4, the empty/load auto-adjustment equipment 7 is installed inside the side beams 2.1 of the frame 2; the two ends of the longitudinal traction device 9 and the lateral damper 11 are respectively connected with the mounts on the frame 2 and the bolster 4; the two ends of the vertical damper 10 are respectively connected with the mounts on the frame 2 and the journal box suspension device 3; the two lateral stops 12 are mounted on the side beams 2.1 of the frame 2 through the lateral stop mount 2.3; each bogie is equipped with an axle-end generator 13 mounted on the outside of the journal box suspension device 3.

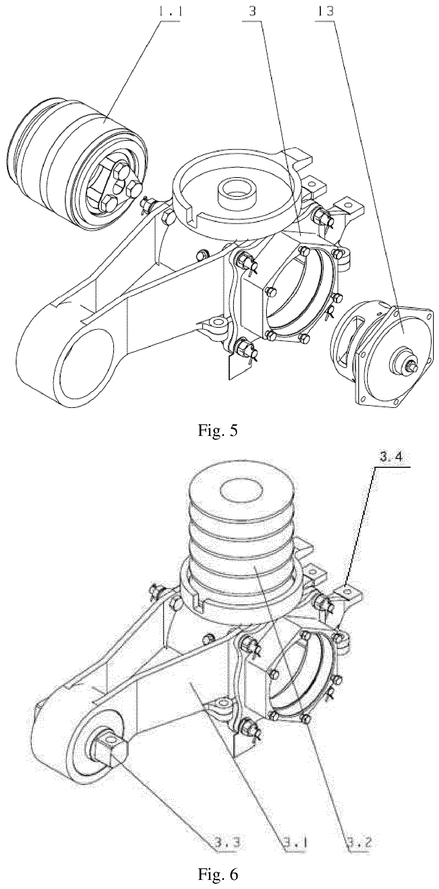

As shown in Fig.5 , when the axle-end generator 13 is installed, the rotor part is fixed to the bearing 1.1 by the axle-end bolts, and the stator part is fixed to the mount of the journal box suspension device 3 .

As shown in Fig. 6, the journal box suspension device 3 is composed of a journal box 3.1, a rubber spring 3.2, a spherical hinge 3.3 and a vertical damper mount 3.4.

## Claims

1. A railway self-generating express freight car bogie, comprising a wheel-axle assembly (1), a frame (2) having two side beams (2.1) and a bolster (4), four journal box suspension devices (3), foundation brake (5), side bearing (6), empty/load auto-adjustment equipment (7), two central suspension devices (8), longitudinal traction device (9), vertical damper (10) and lateral damper (11), wherein an axle-end generator (13) is connected at the outer end of an axle of the wheel-axle assembly (1), a rotor part of the axle-end generator (13) is connected to an end bearing of the wheel-axle assembly (1) by an axle-end bolts, and a stator part is connected to a mount of one of the four journal box suspension devices (3); the frame (2) is located above the four journal box suspension devices (3), and two ends of the bolster (4) are respectively fixed on an inner suspension seat (2.2) in the middle of the side beams (2.1) of the frame through the two central suspension devices dewee(8), wherein the bolster (4) is placed above the two central suspension devices (8), and a length of the bolster (4) is smaller than a center distance of the bogie journal and is placed on an inside of the bogie frame.

2. The railway self-generating express freight car bogie according to claim 1, **characterized in that**: each journal box suspension device (3) consists of a journal box body (3.1) which is connected with the axle of the wheel-axle assembly (1), a top rubber spring (3.2) of the journal box body (3.1), the vertical damper mount provided at one end of the journal box body (3.1), and a circular mounting hole at the other end for installing a rubber node of positioning arm (3.3).

3. The railway self-generating express freight car bogie according to claim 2, **characterized in that**: the two central suspension devices (8), the top rubber spring (3.2) of the journal box body (3.1) and the rubber node of positioning arm (3.3) are all elastic elements formed by metal and vulcanized rubber.

4. The railway self-generating express freight car bogie according to claim 3, **characterized in that**: the frame (2) is connected to each journal box suspension device (3) through the top rubber spring (3.2) of the journal box body (3.1); the vertical damper mount at one end of the journal box body (3.1) is connected to the frame side beam (2.1) through the vertical damper (10).

5. The railway self-generating express freight car bogie according to claim 3, **characterized in that**: the frame (2) is welded with two sets of box-type side beams (2.1) and two parallel tubular cross beams passing through them; all components arranged on the frame (2) are fixed by welding; seats (2.2) are provided on the inner side of the middle part of the side beams (2.1) for mounting the two central suspension devices (8).

6. The railway self-generating express freight car bogie according to claim 3, **characterized in that**: the bolster (4) of the present invention is a box beam structure welded with stencil plates, including upper cover plate, web plate and lower cover plate; the cross-section of the bolster (4) is a U-shaped structure with two wings, with the middle part lower than the two ends.

7. The railway self-generating express freight car bogie according to claim 3, **characterized in that**: a lower center plate is provided on an upper surface of the U-shaped structure in the middle of the bolster (4), and a lateral damper mount on a lower surface; side bearing boxes are provided at two ends of the U-shaped structure; traction device mounts are provided at the two ends and the U-shaped transition section of the lower surface of the U-shaped structure.

8. The railway self-generating express freight car bogie according to claim 3, **characterized in that**: each side beam (2.1) is a box beam structure welded with stencil plates, including upper cover plate, web plate and lower cover plate; the cross-section of each side beam (2.1) is a U-shaped structure with two wings, with the middle part lower than the two ends; a suspension seat (2.2) integrated with the lower cover plate is provided on an inner side of the U-shaped structure; lateral stop mounts (2.3) are provided in the middle of an upper plane of the U-shaped structure of the two side beams of the bogie frame.

9. The railway self-generating express freight car bogie according to claim 3, **characterized in that**: the positioning of each bogie journal box suspension device (3) is realized by the arm-type journal box: the arm-type journal box consists of two mounting holes and a vertical damper mount (3.4) to form a positioning arm, the larger hole in the middle is used to fit the axle bearing (1.1), and the smaller hole at one end is used to mount the rubber node (3.3) of the positioning arm, the rubber node of the positioning arm (3.3) is connected to a mount welded to the frame (2); the vertical damper mount (3.4) at an other end is connected to the frame through the vertical damper (10); in the dynamic operation of the car, positioning is formed with the larger circular hole in the center as the rotation pivot point, and the smaller circular hole and the vertical damper mount (3.4) are used as the two arms.

## Patentansprüche

1. Selbsterzeugendes Eisenbahn-Express-Güterwagen-Drehgestell, umfassend eine Rad-Achs-Baugruppe (1),
einen Rahmen (2) mit zwei Seitenträgern (2.1) und einer Stütze (4), vier Tragzapfenkastenaufhängungsvorrichtungen (3), einer Betriebsbremse (5), einem Seitenlager (6), einer Leer-/Last-Selbstjustiereinrichtung (7), zwei zentralen Aufhängungsvorrichtungen (8), einer Längszugvorrichtung (9), einem Vertikaldämpfer (10) und einem Seitendämpfer (11), wobei
ein Achsendgenerator (13) am äußeren Ende einer Achse der Rad-Achs-Baugruppe (1) angeschlossen ist, ein Rotorteil des Achsendgenerators (13) über eine achsseitige Schraube mit einem Endlager der Rad-Achs-Baugruppe (1) verbunden ist und ein Statorteil mit einer Halterung einer der vier Tragzapfenkastenaufhängungsvorrichtungen (3) verbunden ist; der Rahmen (2) oberhalb der vier Tragzapfenkastenaufhängungsvorrichtungen (3) angeordnet ist, und zwei Enden der Stütze (4) jeweils an einem inneren Aufhängungssitz (2.2) in der Mitte der Seitenträger (2.1) des Rahmens durch die beiden zentralen Aufhängungsvorrichtungen (8) befestigt sind, wobei die Stütze (4) oberhalb der beiden zentralen Aufhängungsvorrichtungen (8) platziert ist, und eine Länge der Stütze (4) kleiner als ein Mittelabstand des Drehgestellzapfens ist und auf einer Innenseite des Drehgestellrahmens platziert ist.

2. Selbsterzeugendes Eisenbahn-Express-Güterwagen-Drehgestell nach Anspruch 1, **dadurch gekennzeichnet, dass**: jede Tragzapfenkastenaufhängungsvorrichtung (3) aus einem Tragzapfenkastenkörper (3.1), der mit der Achse der Rad-Achs-Baugruppe (1) verbunden ist, einer oberen Gummifeder (3.2) des Tragzapfenkastenkörpers (3.1), der an einem Ende des Tragzapfenkastenkörpers (3.1) vorgesehenen Halterung des Vertikaldämpfers und einem kreisförmigen Montageloch am anderen Ende zum Installieren eines Gummiknotens des Positionierungsarms (3.3) besteht.

3. Selbsterzeugendes Eisenbahn-Express-Güterwagen-Drehgestell nach Anspruch 2, **dadurch gekennzeichnet, dass**: die beiden zentralen Aufhängungsvorrichtungen (8), die obere Gummifeder (3.2) des Tragzapfenkastenkörpers (3.1) und der Gummiknoten des Positionierungsarms (3.3) alle elastische Elemente sind, die aus Metall und vulkanisiertem Gummi gebildet sind.

4. Selbsterzeugendes Eisenbahn-Express-Güterwagen-Drehgestell nach Anspruch 3, **dadurch gekennzeichnet, dass**: der Rahmen (2) durch die obere Gummifeder (3.2) des Tragzapfenkastenkörpers (3.1) mit jeder Tragzapfenkastenaufhängungsvorrichtung (3) verbunden ist; die Halterung des Vertikaldämpfers an einem Ende des Tragzapfenkastenkörpers (3.1) durch den Vertikaldämpfer (10) mit dem Seitenträger (2.1) des Rahmens verbunden ist.

5. Selbsterzeugendes Eisenbahn-Express-Güterwagen-Drehgestell nach Anspruch 3, **dadurch gekennzeichnet, dass**: der Rahmen (2) mit zwei Sätzen von Kasten-Seitenträgern (2.1) und zwei parallelen rohrförmigen Querträgern, die durch sie hindurch verlaufen, verschweißt ist; alle am Rahmen (2) angeordneten Bauteile durch Schweißen befestigt sind; Sitze (2.2) an der Innenseite des mittleren Teils der Seitenträger (2.1) zur Montage der beiden zentralen Aufhängungsvorrichtungen (8) vorgesehen sind.

6. Selbsterzeugendes Eisenbahn-Express-Güterwagen-Drehgestell nach Anspruch 3, **dadurch gekennzeichnet, dass**: die Stütze (4) der vorliegenden Erfindung eine mit Schablonenplatten verschweißte Kastenträgerstruktur ist, einschließlich oberer Abdeckplatte, Stegplatte und unterer Abdeckplatte; der Querschnitt der Stütze (4) eine U-förmige Struktur mit zwei Flügeln ist, wobei der mittlere Teil niedriger als die beiden Enden ist.

7. Selbsterzeugendes Eisenbahn-Express-Güterwagen-Drehgestell nach Anspruch 3, **dadurch gekennzeichnet, dass**: eine untere Mittelplatte an einer oberen Oberfläche der U-förmigen Struktur in der Mitte der Stütze (4) und eine Halterung des Seitendämpfers an einer unteren Oberfläche vorgesehen ist; Seitenlagerkästen an zwei Enden der U-förmigen Struktur vorgesehen sind; Zugvorrichtungshalterungen an den beiden Enden und dem U-förmigen Übergangsabschnitt der unteren Oberfläche der U-förmigen Struktur vorgesehen sind.

8. Selbsterzeugendes Eisenbahn-Express-Güterwagen-Drehgestell nach Anspruch 3, **dadurch gekennzeichnet, dass**: jeder Seitenträger (2.1) eine mit Schablonenplatten verschweißte Kastenträgerstruktur ist, einschließlich oberer Abdeckplatte, Stegplatte und unterer Abdeckplatte; der Querschnitt jedes Seitenträgers (2.1) eine U-förmige Struktur mit zwei Flügeln ist, wobei der mittlere Teil niedriger als die beiden Enden ist; ein mit der unteren Abdeckplatte integrierter Aufhängungssitz (2.2) auf einer Innenseite der U-förmigen Struktur vorgesehen ist; in der Mitte einer oberen Ebene der U-förmigen Struktur der beiden Seitenträger des Drehgestellrahmens seitliche Anschlaghalterungen (2.3) vorgesehen sind.

9. Selbsterzeugendes Eisenbahn-Express-Güterwagen-Drehgestell nach Anspruch 3, **dadurch gekennzeichnet, dass**: die Positionierung jeder Tragzapfenkastenaufhängungsvorrichtung (3) durch den Armzapfenkasten durchgeführt wird: der Armzapfenkasten besteht aus zwei Montagelöchern und einer Halterung (3.4) des Vertikaldämpfers, um einen Positionierungsarm zu bilden, das größere Loch in der Mitte wird zum Befestigen des Achslagers (1.1) verwendet, und das kleinere Loch an einem Ende wird zum Montieren des Gummiknotens (3.3) des Positionierungsarms verwendet, der Gummiknoten des Positionierungsarms (3.3) ist mit einer am Rahmen (2) verschweißten Halterung verbunden; die Halterung (3.4) des Vertikaldämpfers ist an einem anderen Ende durch den Vertikaldämpfer (10) mit dem Rahmen verbunden; in dem dynamischen Fahrbetrieb wird die Positionierung mit dem größeren kreisförmigen Loch in der Mitte als Drehpunkt gebildet, und das kleinere kreisförmige Loch und die Halterung (3.4) des Vertikaldämpfers werden als die beiden Arme verwendet.

## Revendications

1. Bogie ferroviaire autogénérateur de wagon de fret express, comportant un ensemble roue-essieu (1),
un châssis (2) ayant deux poutres latérales (2.1) et une traverse pivot (4), quatre dispositifs de suspension de boîte d'essieu (3), un frein de base (5), un glissoir (6), un équipement de réglage automatique de vidage/charge (7), deux dispositifs de suspension centraux (8), un dispositif de traction longitudinal (9), un amortisseur vertical (10) et un amortisseur latéral (11), dans lequel
un générateur côté essieu (13) est relié à l'extrémité extérieure d'un essieu de l'ensemble roue-essieu (1), une partie rotor du générateur côté essieu (13) est reliée à un palier de bout de l'ensemble roue-essieu (1) par des boulons côté essieu, et une partie stator est reliée à un support de l'un des quatre
dispositifs de suspension de boîte d'essieu (3) ; le châssis (2) est situé au-dessus des quatre dispositifs de suspension de boîte d'essieu (3), et deux extrémités de la traverse pivot (4) sont respectivement fixées sur un siège à suspension intérieur (2.2) au milieu des poutres latérales (2.1) du châssis par l'intermédiaire des deux dispositifs de suspension centraux (8), dans lequel la traverse pivot (4) est placée au-dessus des deux dispositifs de suspension centraux (8), et une longueur de la traverse pivot (4) est inférieure à une distance centrale de la fusée de bogie et est placée sur un intérieur du châssis de bogie.

2. Bogie ferroviaire autogénérateur de wagon de fret express selon la revendication 1, **caractérisé en ce que** : chaque dispositif de suspension de boîte d'essieu (3) est constitué d'un corps de boîte d'essieu (3.1) qui est relié à l'essieu de l'ensemble roue-essieu (1), d'un ressort en caoutchouc supérieur (3.2) du corps de boîte d'essieu (3.1), du support d'amortisseur vertical disposé à une extrémité du corps de boîte d'essieu (3.1), et d'un trou de montage circulaire à l'autre extrémité pour installer un nœud en caoutchouc de bras de positionnement (3.3).

3. Bogie ferroviaire autogénérateur de wagon de fret express selon la revendication 2, **caractérisé en ce que** : les deux dispositifs de suspension centraux (8), le ressort en caoutchouc supérieur (3.2) du corps de boîte d'essieu (3.1) et le nœud en caoutchouc de bras de positionnement (3.3) sont tous des éléments élastiques formés de métal et de caoutchouc vulcanisé.

4. Bogie ferroviaire autogénérateur de wagon de fret express selon la revendication 3, **caractérisé en ce que** : le châssis (2) est relié à chaque dispositif de suspension de boîte d'essieu (3) par l'intermédiaire du ressort en caoutchouc supérieur (3.2) du corps de boîte d'essieu (3.1) ; le support d'amortisseur vertical à une extrémité du corps de boîte d'essieu (3.1) est relié à la poutre latérale de châssis (2.1) par l'intermédiaire de l'amortisseur vertical (10).

5. Bogie ferroviaire autogénérateur de wagon de fret express selon la revendication 3, **caractérisé en ce que** : le châssis (2) est soudé avec deux jeux de poutres latérales de type caisson (2.1) et deux traverses tubulaires parallèles qui les traversent ; tous les composants agencés sur le châssis (2) sont fixés par soudage ; des sièges (2.2) sont prévus sur le côté intérieur de la partie centrale des poutres latérales (2.1) pour le montage des deux dispositifs de suspension centraux (8).

6. Bogie ferroviaire autogénérateur de wagon de fret express selon la revendication 3, **caractérisé en ce que** : la traverse pivot (4) de la présente invention est une structure de poutre-caisson soudée avec des plaques calibres, incluant une plaque de recouvrement supérieure, une âme et une plaque de recouvrement inférieure ; la section transversale de la traverse pivot (4) est une structure en forme de U avec deux ailes, la partie centrale étant plus basse que les deux extrémités.

7. Bogie ferroviaire autogénérateur de wagon de fret express selon la revendication 3, **caractérisé en ce que** : une plaque centrale inférieure est prévue sur une surface supérieure de la structure en forme de U au milieu de la traverse pivot (4), et un support d'amortisseur latéral sur une surface inférieure ; des boîtiers de glissoir sont prévus à deux extrémités de la structure en forme de U ; des supports de dispositif de traction sont prévus aux deux extrémités et au niveau de la section de transition en forme de U de la surface inférieure de la structure en forme de U.

8. Bogie ferroviaire autogénérateur de wagon de fret express selon la revendication 3, **caractérisé en ce que** : chaque poutre latérale (2.1) est une structure de poutre-caisson soudée avec des plaques calibres, incluant une plaque de recouvrement supérieure, une âme et une plaque de recouvrement inférieure ; la section transversale de chaque poutre latérale (2.1) est une structure en forme de U avec deux ailes, la partie centrale étant plus basse que les deux extrémités ; un siège à suspension (2.2) intégré à la plaque de recouvrement inférieure est prévu sur un côté intérieur de la structure en forme de U ; des supports de butée latérale (2.3) sont prévus au milieu d'un plan supérieur de la structure en forme de U des deux poutres latérales du châssis de bogie.

9. Bogie ferroviaire autogénérateur de wagon de fret express selon la revendication 3, **caractérisé en ce que** : le positionnement de chaque dispositif de suspension de boîte d'essieu de bogie (3) est réalisé par la boîte d'essieu de type bras : la boîte d'essieu de type bras est constituée de deux trous de montage et d'un support d'amortisseur vertical (3.4) pour former un bras de positionnement, le plus grand trou au milieu est utilisé pour monter le palier d'essieu (1.1), et le plus petit trou à une extrémité est utilisé pour monter le nœud en caoutchouc (3.3) du bras de positionnement, le nœud en caoutchouc du bras de positionnement (3.3) est relié à un support soudé au châssis (2) ; le support d'amortisseur vertical (3.4) à une autre extrémité est relié au châssis par l'intermédiaire de l'amortisseur vertical (10) ; lors du fonctionnement dynamique du véhicule, le positionnement est formé avec le plus grand trou circulaire au centre comme point pivot de rotation, et le plus petit trou circulaire et le support d'amortisseur vertical (3.4) sont utilisés comme deux bras.
